# EUROPEAN PATENT SPECIFICATION

(11) **EP 0 950 670 B1**
(45) Date of publication and mention of the grant of the patent: **27.03.2002**
(21) Application number: 99107520.1
(22) Date of filing: 15.04.1999
(51) Int. Cl.: C08F 10/00, C08F 4/68

(54) **Olefin polymerization process and catalyst system therefor**
Verfahren zur Polymerisation von Olefin und Katalysatorsystem dafür
Procédé de polymérisation d'oléfine et systéme catalytique pour ce procédé

(30) Priority: 17.04.1998 CA 2235175
(43) Date of publication of application: 20.10.1999
(73) Proprietor: Bayer Inc., Sarnia, ON N7T 7M2 (CA)
(72) Inventor: Zahalka, Hayder A., Sarnia, Ontario, CA N7S 4Y8 (CA)
(74) Representative: Steiling, Lothar, Dr.

(56) References cited:
- EP-A- 0 463 609
- EP-A- 0 464 744
- EP-A- 0 712 871
- WO-A-95/00564
- US-A- 3 711 455

## Description

### TECHNICAL FIELD

The present invention relates to an olefin polymerization catalyst and to a process for olefin polymerization.

### BACKGROUND ART

The polymerization of olefins is well known in the art. It is known to produce both crystalline and amorphous polyolefins via the so-called Ziegler-Natta polymerization process.

Generally, the polymerization reaction is catalysed through the use of a transition metal catalyst compound and a cocatalyst compound. More specifically, it is conventional to produce EPDM (ethylene-propylene-diene-methylene) terpolymers and EPM (ethylene-propylene-methylene) copolymers in solution or slurry processes using Ziegler-Natta catalysts such as VOCl₃, V(acac)₃ (acac/acetyl acetone) and VCl₄, in combination with an aluminum-based cocatalyst such as diethyl aluminochloride (DEAC) and/or ethyl aluminum sesquichloride (EASC) and/or ethyl aluminum dichloride (EADC).

A problem with these vanadium catalyst systems is "catalyst decay" as a function of polymerization time and temperature. In other words, these vanadium catalysts do not show constant activity during polymerization of the olefinic monomers. Simply increasing the polymerization temperature to obviate this problem results in a decrease in catalyst activity.

Over the years, the mechanistic aspects of EPDM polymerization with various vanadium compounds (+3 and +5 valent) have been studied. During polymerization, the vanadium compounds are readily reduced to V⁺² upon addition of the aluminum alkyl halide cocatalyst. As discussed above, simply increasing the polymerization temperature also results in reduction of the vanadium oxidation state to +2. Unfortunately, the +2 oxidation state of the vanadium is not an active oxidation state for olefinic polymerization (e.g., EPM or EPDM polymerization). Rather, +3 is oxidation state of vanadium which is active in this polymerization. The inactivated V⁺² can be activated or reactivated by the addition of chlorinated hydrocarbons such as those having the general formula:
wherein: 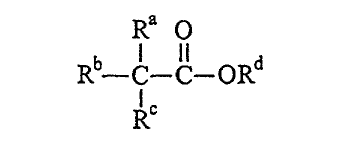
R^{a} and R^{b} may be the same or different and are a halogen;
R^{c} is selected from the group comprising halogen, an alkyl group, an aryl group, an alkenyl group, a cycloalkyl group and an ester group; and
R^{d} is selected from the group comprising an alkyl group, an aryl group and an alkenyl group. Non-limiting examples of useful such chlorinated hydrocarbons include ethyl-trichloroacetate (ETA) and dichlorophenyl ethyl acetate (DCPEE).

The prior art has attempted to overcome these problems using a variety of approaches.

United States patent 3,711,455 [Cucinella et al. (Cucinella)] teaches a process for the preparation of copolymers of a monoolefin and a diolefin and the products obtained thereby. Generally, the point of novelty taught by Cucinella relates to the use of a catalyst system comprising:
(i) a vanadium compound of the type V(NR₂)₄ or V(NR₂)₂X₂ wherein R may be an alkyl, aryl or cycloalkyl radical and X a halogen such as Cl, Br or I; and
(ii) an aluminum compound of the type AlRₓX₃₋ₓ wherein R may be an alkyl, aryl or cycloalkyl radical or hydrogen and X a halogen such as Cl, Br or I, wherein 1≤x≤2
- see column 1, lines 48-57. Cucinella teaches that the advantage accruing from the use of this catalyst is production of a true copolymer of monoolefin and diolefin (i.e., as compared to contemporaneous production of individual homopolymers of the starting monomers) in good yield which is capable of being crosslinked when subjected to curing.

Published European patent application 0,532,098 [Renkema et al. (Renkema #1)] teaches a catalyst and a process for the preparation of an olefin polymer. Generally, the point of novelty taught by Renkema #1 relates to the use of a catalyst comprising a transition metal atom onto which is bound an imidoaryl ligand - see page 2, lines 21-24.

International publication number WO94/14854 [Renkema et al. (Renkema #2)] teaches a catalyst and a process for Ziegler polymerization. Generally, the point of novelty taught by Renkema #2, which appears to build on the teachings of Renkema #1, relates to the use of a catalyst system comprising a transition metal-imidoaryl complex containing at least one amido group bound to the transition metal, the aryl group in the complex being an *o,o*-disubstituted phenyl group - see page 1, lines 31-36. Renkema #2 further teaches that the combination of the amido group and the imido, *o,o*-disubstituted phenyl group both bound to the transition metal results in a catalyst having both high activity and good stability - see page 1, line 37 to page 2, line 16.

Notwithstanding these prior art approaches there is a continuing need in the art for a catalyst system which can be used in olefin polymerization (e.g., EPM and EPDM) and possess improved catalyst activity/efficiency.

### DISCLOSURE OF THE INVENTION

It is an object of the present invention to provide a novel process for production of an olefin polymer which obviates or mitigates at least one of the above-identified disadvantages of the prior art.

It is another object of the present invention to provide a novel olefin monomer polymerization catalyst system which obviates or mitigates at least one of the above-identified disadvantages of the prior art.

It is another object of the present invention to provide a novel olefin polymerization catalyst system kit which obviates or mitigates at least one of the above-identified disadvantages of the prior art.

Accordingly, in one of its aspects, the present invention provides a process for production of an olefin polymer comprising the step of polymerizing an olefin monomer in the presence of a catalyst system comprising:
(i) a vanadium catalyst having the formula: 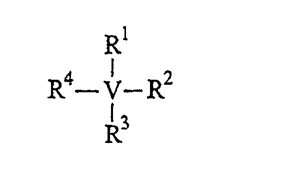 wherein:
   R¹, R², R³ and R⁴ are the same or different and each is selected from a halogen and -(NR⁵R⁶), R⁵ and R⁶ are the same or different and each is selected from the group comprising an alkyl group, an aryl group, an alkenyl group, a cycloalkyl group and a silicon-containing hydrocarbyl group, and R¹ and R² may be combined to form a cyclic moiety, with the proviso that at least one of R¹, R², R³ and R⁴ is -(NR⁵R⁶),
   or the formula: 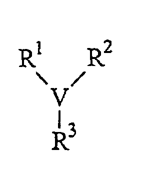 wherein:
   R¹, R² and R³ are as defined above, with the proviso that at least one of R¹, R² and R³ is -(NR⁵R⁶);
(ii) an organoaluminum cocatalyst; and
(iii) a catalyst activator having the formula:

   M(R⁷)ₙ
wherein M is a metal selected from Group 2 and Group 12 (New notation of the Periodic Table of Elements as noted in the CRC Handbook of Chemistry and Physics (70th Edition)) of the Periodic Table, R⁷ is a C₁-C₁₂ alkyl group and n is a number equal to the valence of M;
wherein at least one of the vanadium catalyst and organoaluminum cocatalyst contains a halogen moiety.

In another of its aspects, the present invention provides an olefin monomer polymerization catalyst system, the system comprising:
(i) a vanadium catalyst having the formula: 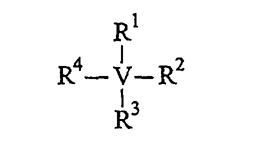 wherein:
   R¹, R², R³ and R⁴ are the same or different and each is selected from a halogen and -(NR⁵R⁶), R⁵ and R⁶ are the same or different and each is selected from the group comprising an alkyl group, an aryl group, an alkenyl group, a cycloalkyl group and a silicon-containing hydrocarbyl group, and R¹ and R² may be combined to form a cyclic moiety, with the proviso that at least one of R¹, R², R³ and R⁴ is -(NR⁵R⁶),
   or the formula: 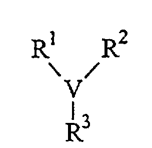 wherein:
   R¹, R² and R³ are as defined above, with the proviso that at least one of R¹, R² and R³ is -(NR⁵R⁶);
(ii) an organoaluminum cocatalyst; and
(iii) a catalyst activator having the formula:

   M(R⁷)ₙ

   wherein M is a metal selected from Group 2 and Group 12 of the Periodic Table, R⁷ is a C₁-C₁₂ alkyl group and n is a number equal to the valence of M;
   wherein at least one of the vanadium catalyst and organoaluminum cocatalyst contains a halogen moiety.

In yet another of its aspects, the present invention provides an olefin polymerization catalyst system kit comprising, as individual components:
(i) a vanadium catalyst having the formula: 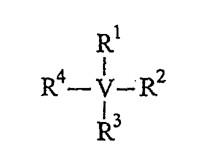 wherein:
   R¹, R², R³ and R⁴ are the same or different and each is selected from a halogen and -(NR⁵R⁶), R⁵ and R⁶ are the same or different and each is selected from the group comprising an alkyl group, an aryl group, an alkenyl group, a cycloalkyl group and a silicon-containing hydrocarbyl group, and R¹ and R² may be combined to form a cyclic moiety, with the proviso that at least one of R¹, R², R³ and R⁴ is -(NR⁵R⁶),
   or the formula: 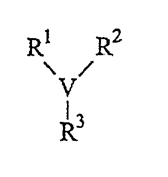 wherein:
   R¹, R² and R³ are as defined above, with the proviso that at least one of R¹, R² and R³ is -(NR⁵R⁶);
(ii) an organoaluminum cocatalyst; and
(iii) a catalyst activator having the formula:

   M(R⁷)ₙ

   wherein M is a metal selected from Group 2 and Group 12 of the Periodic Table, R⁷ is a C₁-C₁₂ alkyl group and n is a number equal to the valence of M;
   wherein at least one of the vanadium catalyst and organoaluminum cocatalyst contains a halogen moiety.

Thus, it has been discovered that the combination of a specific class of vanadium catalysts with a specific class of catalyst activator compounds surprisingly and unexpectedly results in: (i) a significant improvement in catalyst activity, and (ii) desirable molecular weight control of the resulting polymer. As will be developed herein below, this discovery is surprising and unexpected because the specific class of catalyst activator compounds, when used with other classes of vanadium catalysts, in fact reduces the activity of such other vanadium catalysts.

### BEST MODE FOR CARRYING OUT THE INVENTION

Thus, the present catalyst system comprises: a vanadium catalyst, an organoaluminum cocatalyst and a catalyst activator.

The vanadium catalyst has the formula: 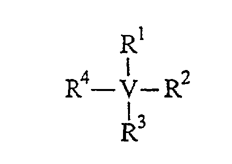 wherein:
R¹, R², R³ and R⁴ are the same or different and each is selected from a halogen and -(NR⁵R⁶), R⁵ and R⁶ are the same or different and each is selected from the group comprising an alkyl group, an aryl group, an alkenyl group, a cycloalkyl group and a silicon-containing hydrocarbyl group, and R¹ and R² may be combined to form a cyclic moiety, with the proviso that at least one of R¹, R², R³ and R⁴ is -(NR⁵R⁶), or the formula: 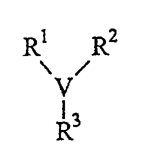 wherein:
R¹, R² and R³ are as defined above, with the proviso that at least one of R¹, R² and R³ is -(NR⁵R⁶). Such compounds are known in the art and the preparation thereof will be apparent to those of skill in the art.

Preferably, the vanadium catalyst has the formula: 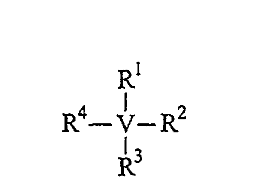 wherein:
R¹, R², R³ and R⁴ are as described hereinabove.

In one preferred embodiment, R¹, R², R³ and R⁴ are the same or different and each -(NR⁵R⁶) (i.e., in this preferred embodiment, the organoaluminum cocatalyst contains a halogen moiety). In another preferred embodiment, R¹, R² and R³ are the same or different and each is -(NR⁵R⁶), and R⁴ a halogen. In yet another preferred embodiment, R¹ and R² are the same or different and each is -(NR⁵R⁶), and R³ and R⁴ are the same or different and each is a halogen. In yet another preferred embodiment, R¹ is -(NR⁵R⁶), and R², R³ and R⁴ are the same or different and each is a halogen.

In one preferred embodiment, at least one (more preferably each) of R⁵ and R⁶ is selected from the group comprising a C₂-C₈ alkyl group, a C₅-C₂₀ aryl group and a C₃-C₂₀ cycloalkyl group. More preferably, at least one (even more preferably both) of R⁵ and R⁶ is selected from the group comprising an ethyl group, a propyl group, an *i*-propyl group, a butyl group and a cyclohexyl group. It is preferred, for a given vanadium catalyst, that R⁵ and R⁶ are the same.

In another preferred embodiment, at least one (more preferably each) of R⁵ and R⁶ is a silicon-containing hydrocarbyl group having the following formula:

-SiR⁹R¹⁰R¹¹

wherein R⁹, R¹⁰ and R¹¹ are the same or different and each is selected from the group comprising a C₂-C₈ alkyl group, a C₅-C₂₀ aryl group and a C₃-C₂₀ cycloalkyl group.

Of course, the halogen moiety on the vanadium catalyst, if present, may be selected from the group comprising fluoride, bromide, chloride, iodide and astatine. The preferred halogen moiety is chloride. If two or more halogen moieties are present on the vanadium catalyst, it is preferred that they be the same.

As indicated above, R¹ and R² may be combined to form a cyclic moiety. Thus, it is intended to include within the scope of the vanadium catalyst useful herein bis-vanadium derivatives comprising one, preferably two, bridging groups between the two vanadium atoms. In a first embodiment, R¹ and R² may be combined to form an organic or organometallic cyclic moiety (i.e., the combination of at least R¹, R² and V form a ring). In a second embodiment, R¹ and R² may be combined to form an inorganic cyclic moiety. A non-limiting example of the second embodiment is a compound having the formula: 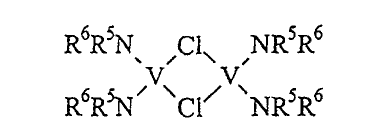 wherein:
R⁵ and R⁶ are as defined hereinabove. This compound may be produced by reaction of VCl₃(THF)₃ with a two-fold molar excess of a compound of the formula R⁵R⁶NLi with heating. Another non-limiting example of the second embodiment is a compound having the formula: 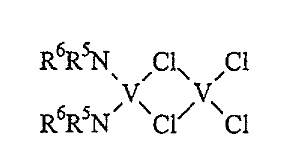 wherein:
R⁵ and R⁶ are as defined hereinabove. This compound may be produced by reaction of VCl₃(THF)₃ with an equimolar amount of a compound of the formula R⁵R⁶NLi.

Thus, when the vanadium catalyst is tetravalent (i.e., each of R¹, R², R³ and R⁴ are present) and contains no chlorine bridges as described above, the vanadium is in a +4 oxidation state. When the vanadium catalyst is: (i) tetravalent and contains chlorine bridges as described above, or (ii) trivalent (i.e., only R¹, R² and R³ are present), the vandium is in a +3 oxidation state. A vanadium catalyst as described above and having these oxidation states is useful within the scope of the present invention. As will be appreciated by those of skill in the art, from a practical perspective, it is very difficult to obtain the vanadium catalyst in a pure (i.e., 100%) form. Thus, while the preferred form of vanadium catalyst for use herein is in the +4 oxidation state, the catalyst used may typically contain minor amounts (i.e., up to 20 percent by weight, more likely up to 10 percent by weight) of vanadium catalyst in the +3 oxidation state. Such catalyst mixtures are intended to be included within the spirit and scope of the present invention.

The second component of the present catalyst system is an organoaluminum cocatalyst. The use of organoaluminum cocatalysts in Ziegler-Natta polymerization processes is conventional and the choice of organoaluminum cocatalyst to be used in the present catalyst system is within the purview of a person skilled in the art. Preferably, the organoaluminum cocatalyst comprises at least one compound having the formula:

(R⁸)ₚAlY_{q}

wherein R⁸ is selected from the group comprising a C₂-C₂₀ alkyl group, a C₂-C₁₀ alkoxyl group and a C₃-C₂₀ cycloalkyl group, Y is selected from the group comprising R⁸ and a halogen and p+q is 3 (as will be developed below, p and q need not necessarily be integers). Preferably, the organoaluminum cocatalyst comprises a mixture of at least two of said compounds.

Preferably, p is a number in the range of from 1 to 2, and q is a number in the range of from 0 to 2, again with the proviso that p+q is 3. In a more preferred embodiment, p is 2 and q is 1. In another more preferred embodiment, p and q are 1.5. In yet another more preferred embodiment, q is 1 and p is 2.

Preferably, R⁸ is ethyl.

Preferably Y is a halogen. Of course, the halogen Y in the preferred formula for the organoaluminum cocatalyst may be selected from the group comprising fluoride, bromide, chloride, iodide and astatine. The preferred halogen moiety is chloride. If two or more halogen moieties are present on the organoaluminum cocatalyst, it is preferred that they be the same.

Non-limiting examples organoaluminum cocatalysts useful in the present invention may be selected from the group comprising trimethylaluminum, triethylaluminum, diethyl aluminum hydride, triisobutyl aluminum, tridecyl aluminum, tridodecyl aluminum, diethyl aluminum methoxide, diethyl aluminum ethoxide, diethyl aluminum phenoxide, diethyl aluminum chloride, ethyl aluminum dichloride, ethyl aluminum sesquichloride, diisobutylaluminum chloride, dioctylaluminum chloride, octylaluminum sequichloride, methyl diethoxy aluminum, methyl aluminoxane and mixtures thereof. As is known to those of skill in the art, if it is desired to utilize ethyl aluminum sesquichloride as the organoaluminum cocatalyst, to is possible to produce the cocatalyst be mixing equimolar amounts of diethyl aluminum chloride and ethyl aluminum dichloride.

In a preferred embodiment of the invention, it is preferred to utilize a two component organoaluminum cocatalyst consisting of an alkyl aluminum chloride compound as described hereinabove (e.g., diethyl aluminum chloride, ethyl aluminum dichloride, ethyl aluminum sesquichloride and mixtures thereof) and an organo aluminum compound as described hereinabove (e.g., trimethylaluminum, triethylaluminum, diethyl aluminum hydride, triisobutyl aluminum, tridecyl aluminum, tridodecyl aluminum, diethyl aluminum methoxide, diethyl aluminum ethoxide, diethyl aluminum phenoxide, methyl diethoxy aluminum, methyl aluminoxane and mixtures thereof).

The third component of the present catalyst system is a catalyst activator having the formula:

M(R⁷)ₙ

wherein M is a metal selected from Group 2 and Group 12 of the Periodic Table, R⁷ is a C₁-C₁₂ alkyl group and n is a number equal to the valence of M.

Preferably, R⁷ is selected from the group comprising methyl, ethyl, *n*-propyl, isopropyl, *n*-butyl, *t*-butyl, *n*-hexyl, *n*-octyl, *n*-decyl and the like. More preferably, R⁷ is a C₁-C₆ alkyl group. Most preferably, R⁷ is an ethyl group.

Preferably, M is selected from the group comprising beryllium, magnesium, calcium, strontium, barium, zinc, cadmium and mercury. Most preferably, M is zinc.

Thus, non-limiting examples of compounds useful as a catalyst activator in the present catalyst system may be selected from the group comprising dimethyl zinc, diethyl zinc, dipropyl zinc, di-*i*-propyl zinc, di-*s*-butyl zinc, methylpropyl zinc, dipentyl zinc, methylpentyl zinc, dimethyl cadmium, diethyl cadmium, dipropyl cadmium, di-*i*-propyl cadmium, di-*s*-butyl cadmium, methylpropyl cadmium, dipentyl cadmium, methlypentyl cadmium, dimethyl mercury, diethyl mercury, dipropyl mercury, di-*i*-propyl mercury, di-*s*-butyl mercury, methylpropyl mercury, dipentyl mercury, methylpentyl mercury, dimethyl beryllium, diethyl beryllium, dipropyl beryllium, di-*i*-propyl beryllium, di-*s*-butyl beryllium, methylpropyl beryllium, dipentyl beryllium, methlypentyl beryllium, dimethyl magnesium, diethyl magnesium, dipropyl magnesium, di-*i*-propyl magnesium, di-*s*-butyl magnesium, methylpropyl magnesium, dipentyl magnesium, methlypentyl magnesium, dimethyl calcium, diethyl calcium, dipropyl calcium, di-*i*-propyl calcium, di-*s*-butyl calcium, methylpropyl calcium, dipentyl calcium, methlypentyl calcium, dimethyl strontium, diethyl strontium, dipropyl strontium, di-*i*-propyl strontium, di-*s*-butyl strontium, methylpropyl strontium, dipentyl strontium, methlypentyl strontium, dimethyl barium, diethyl barium, dipropyl barium, di-*i*-propyl barium, di-*s*-butyl barium, methylpropyl barium, dipentyl barium, methlypentyl barium and mixtures thereof.

The most preferred activator for use in the present catalyst system is diethyl zinc.

The present catalyst system may be used to produce an olefin polymer. As used through this specification, the term Aolefin polymer≅ is intended to have a broad meaning and encompasses homopolymers, copolymers, terpolymers, etc. which are derived from the polymerization of at least one olefin monomer. As used throughout this specification, the term "olefin monomer" is intended to have a broad meaning and encompasses α-olefin monomers, diolefin monomers and monomers containing at least one internal olefin linkage.

In one preferred embodiment, the olefin monomer is ethylene.

In another preferred embodiment, the olefin monomer is an α-olefin monomer. α-Olefin monomers are well known in the art and the choice thereof for use in the present process is within the purview of a person skilled in the art. Preferably, the α-olefin monomer is selected from the group propylene, butene-1, isobutene, pentene-1, hexene-1, octene-1, branched isomers thereof, styrene, α-methylstyrene and mixtures thereof. The most preferred α-olefin monomer is propylene.

In yet another preferred embodiment, the olefin monomer comprises a diolefin monomer. Diolefin monomers are well known in the art and the choice thereof for use in the present process is within the purview of a person skilled in the art. In one preferred embodiment, the diolefin monomer an aliphatic compound. Non limiting examples of suitable aliphatic compounds may be selected from the group comprising 1,3-butadiene; isoprene; 2,3-dimethylbutadiene-1,3; 2-ethylbutadiene-1,3; piperylene; myrcene; allene; 1,2-butadiene; 1,4,9-decatrienes; 1,4-hexadiene; 1,6-octadiene; 1,5-hexadiene; 4-methylhexadiene-1,4; 5-methylhexadiene-1,4; 7-methyl-octadiene-1,6; 3,7-dimethyl-octadiene-1,6; 3,7-dimethyl-octadiene-1,7; phenylbutadiene; pentadiene and mixtures thereof. In another preferred embodiment, the diolefin monomer is an alicyclic compound. Non-limiting examples of suitable alicyclic compounds may be selected from the group comprising norbornadiene, alkyl derivatives thereof, 5-alkylidenenorbornene-2 compounds, 5-alkenylnorbornene-2 compounds and mixtures thereof, such as 5-methylene-2-norbornene, 5-ethylidene-2-norbornene, 5-vinylidene-2-norbornene, 5-propenyl-2-norbornene and mixtures thereof. Further non-limiting examples of suitable alicyclic compounds may be selected from the group comprising 1,4-cyclohexadiene, 1,5-cyclooctadiene, 1,5-cyclododecadiene, methyltetrahydroindene, dicyclopentadiene, bicyclo [2.2.1] hepta-2,5-2,5-diene and mixtures thereof. The most preferred diolefin monomers may be selected from the group comprising 5-ethylidene-2-norbornene and 5-vinylidene-2-norbornene.

Of course it is possible, and preferred, to utilize mixtures of the various types of olefin monomers described hereinabove.

In one preferred embodiment, the olefin monomer is a mixture of ethylene and at least one %-olefin (as described hereinabove) which results in the production of a copolymer. The preferred such monomer mixture comprises ethylene and propylene. In this embodiment, it is preferred to utilize a mixture comprising in the range from 30 to 75, more preferably from 35 to 70 weight percent ethylene and in the range from 25 to 70, more preferably from 30 to 65 weight percent α-olefin.

In another preferred embodiment, the olefin is a mixture of ethylene, at least one α-olefin (as described hereinabove) and at least one diolefin monomer (as described hereinabove) which results in the production of a terpolymer. The preferred such monomer mixture comprises ethylene, propylene and 5-ethylidene-2-norbornene. In this embodiment, it is preferred to incorporate into the preferred mixture of ethylene and α-olefin in the range from 0.5 to 15, more preferably from 1 to 12 weight percent of the diolefin monomer.

Polymerization of the olefin monomer(s) using the present catalyst system may be carried out in solution or suspension, preferably in suspension, in a polymerization medium containing a hydrocarbon (preferably a saturated hydrocarbon) in which the polymer is substantially insoluble. When the polymerization process is conducted in suspension, one of the reactants (e.g., the α-olefin, if used) may be used as the polymerization diluent or a hydrocarbon in which the product polymer is insoluble may be used as the diluent. Polymerization of the olefin monomer(s) may be carried out batchwise or in a continuous manner. The preferred process involves continuous slurry polymerization in which ethylene, α-olefin monomer, diolefin monomer (if used) and the catalyst system are continuously supplied to a reaction zone and the product polymer is formed as a slurry in the liquid phase. Suitable inert hydrocarbons for use as the polymerization medium are those selected from the group comprising C₃-C₈ aliphatic hydrocarbons, C₅-C₁₀ cyclic aliphatic hydrocarbons, C₆-C₉ aromatic hydrocarbons, C₃-C₈ monoolefinic hydrocarbons and mixtures thereof. Non-limiting examples of such hydrocarbons include: (i) straight and branched chain hydrocarbons such as propane, butane, isobutane, pentane, hexane, octane and the like; (ii) cyclic and alicyclic hydrocarbons such as cyclopentane, cyclohexane, cycloheptane, ethylcyclopentane, methylcyclohexane, methylcycloheptane and the like; (iii) alkyl-substituted aromatic hydrocarbons such as toluene, xylene and the like; and (iv) liquid olefins which may act as monomers or comonomers such as propylene, butene-1 and the like. The preferred hydrocarbon, if used, is propylene.

The choice of relative proportions of the vanadium (i.e., from the vanadium catalyst) and total aluminium (i.e., from the organoaluminum cocatalyst) is within the purview of a person skilled in the art. Thus, the ratio of the molar amount of the vanadium catalyst to the total molar amount of organoaluminum cocatalyst(s) is preferably in the range of from 1:5 to 1:1000, more preferably from 1:10 to 1:300, most preferably from 1:10 to 1:150.

The activator component of the present catalyst system should be added to the polymerization reaction in an amount sufficient to provide in the range from 0.0001 to 2.0 moles of activator per mole of olefin monomer (i.e., total molar amount of all olefin monomers if a mixture is used). The activator component may be added to the reactor dissolved in an inert liquid solvent. The inert liquid solvent should be nonreactive with the activator and the other components of the reaction mixture (i.e., the vanadium catalyst, the organoaluminum cocatalyst, etc.). Non-limiting examples of useful inert liquid solvents include isopentane, hexane, heptane, toluene, xylene and naphtha. Preferably, the solution added to the polymerization reaction contains the activator in an amount of in the range from 1 to 99, preferably from 2 to 25 weight percent.

Other additives conventionally used in Ziegler-Natta polymerization processes may be used in the present process. Thus, in some cases, it may be desirable and preferred, to add to the catalyst system a catalyst promoter. Non-limiting examples of suitable catalyst promoters include chlorinated hydrocarbons such as those having the general formula: 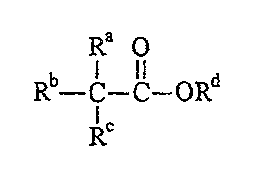 wherein:
R^{a} and R^{b} may be the same or different and are a halogen;
R^{c} is selected from the group comprising halogen, an alkyl group, an aryl group, an alkenyl group, a cycloalkyl group and an ester group; and
R^{d} is selected from the group comprising an alkyl group, an aryl group and an alkenyl group. Non-limiting examples of useful such chlorinated hydrocarbons include ethyl-trichloroacetate (ETA), dichlorophenyl ethyl acetate (DCPEE) and 2-halo malonic ester compounds such as diethyl 2-chloro-2-phenyl malonate.

The present process is generally carried out at temperatures in the range of from -40°C to 200°C, preferably from -20° to 100°C, more preferably from 0°C to 80°C, and at a pressure in the range of from 5 to 700 psig.

The precise mode of carrying out the present process is not particularly restricted. In one preferred embodiment, the present process may be carried out by first introducing the hydrocarbon diluent into a stirred tank reactor together with the olefin monomer(s) and adjusting the pressure of the reactor contents so that the temperature of the reactor contents are brought to the desired level. Ethylene gas may be introduced either into the vapour phase of the reactor or sparged into the liquid phase as is known in the art. Thereafter, a hydrocarbon solution of the vanadium compound and a hydrocarbon solution of the organoaluminum cocatalyst(s) in the desired ratios are introduced to the reactor. The polymerization occurs substantially in the liquid phase, a slurry of the product polymer being formed in the hydrocarbon diluent. The rate of polymerization may be controlled by the rate of catalyst addition. The reactor temperature and pressure may be controlled through the vaporization of the liquid phase as well as by cooling coils, jackets, etc. If a mixture of olefin monomers is used, the content of any one monomer in the polymer product may be controlled by manipulating the feed rates of the respective olefin monomers to the reactor and by manipulating the concentration of catalyst fed to the reactor. The polymer product may be recovered in a conventional manner by flashing off the lower boiling compounds either at reduced pressure or by treatment of the slurry with a mixture of steam and hot water, and by the use of a devolatilizing extruder or by further steam stripping and subsequent dewatering and drying. In a preferred continuous process, the mean residence time of the catalyst and polymer in the reactor is generally in the range from 20 minutes to 8 hours, preferably from 30 minutes to 6 hours, more preferably from 1 to 4 hours.

Embodiments of the invention will be illustrated with reference to the following Examples which are provided for illustrative purposes and should not be used to construe or limited the scope of the invention.

In the Examples, the weight percent ethylene in the polymer products was determined by Fourier Transform Infra Red (FTIR) spectroscopy. Thus, polymeric films were pressed at 150°C and the spectra recorded. The ethylene content was determined by integrating the absorbance peaks at 720 cm⁻¹ and 1153 cm⁻¹, and performing the calculation using empirically derived relationships.

### EXAMPLES 1-10

In these Examples, various ethylene-propylene copolymers were produced in a batch process under slurry conditions.

Polymerization was conducted in a one liter ZipperClaveϑ reactor. As is known to those of skill in the art, this reactor is jacketed and stirred with an explosion-proof motor. The reactor was equipped with a series of independent syringe pumps to allow for introduction to the reactor of catalyst, cocatalyst, catalyst activator and catalyst promoter (if used) through separate feed streams. The reactor system was interfaced with a computer to facilitate direct data acquisition (e.g., polymerization temperature, ethylene flow, etc.).

The catalyst used in Examples 1-6 and 9-10 was [(CyH)₂N]₂VCl₂ (CyH/cyclohexyl). This catalyst was produced in a conventional manner. The catalyst used in Example 7 and 8 was V(acac)₃ (acac/acetyl acetone) which was produced in a conventional manner.

The cocatalysts used in these Examples were diethyl aluminum chloride (DEAC) or ethylaluminum sesquichloride (EASC). The catalyst activator, if used. was diethyl zinc (DEZ). The precise cocatalyst used in each Example and the presence/absence of DEZ is set out in Table 1. Further, a catalyst promoter in the form of a chlorinated hydrocarbon was used.

The ZipperClave™ reactor was charged with an inert hydrocarbon diluent (240 mL), liquid propylene (250 mL) and pressurized with ethylene to a total pressure of 87-99 psig. After allowing the contents of the reactor to equilibrate to a temperature of 12°C, the vanadium catalyst containing catalyst promoter (molar ratio of promoter to vanadium was approximately 5:1) and organoaluminum cocatalyst were introduced to the reactor to provide the cocatalyst/catalyst molar ratio reported in Table 1, followed by addition of the catalyst activator DEZ (9.6 mL; 10 mM) for Examples 2, 4, 6, 8 and 10 only. Ethylene was supplied to maintain the initial total pressure in the reactor. The polymerization was carried out for up to 90 minutes after which any unreacted monomers were flashed off and the temperature of the reactor was raised to approximately 20°C. The polymer product was recovered with an alcohol and thereafter dried in a vacuum oven at 60°C.

As will be apparent to those of skill in the art, a catalyst activator (i.e., DEZ) was not used in Examples 1, 3, 5, 7 and 9. Accordingly, Examples 1, 3, 5, 7 and 9 are outside the scope of the present invention and are provided for comparative purposes only. As will be further apparent to those of skill in the art, since V(acac)₃ was used as the catalyst in Example 8, this Example is also outside the scope of the present invention and is provided for comparative purposes only.

In Table 1, there is reported the precise cocatalyst used, the cocatalyst/catalyst molar ratio, an indication of whether DEZ was used, the weight percentage of ethylene in the polymer product and the molecular weights (Mn and Mw) of the polymer product. The molecular weight of the polymer products was determined by gel permeation chromatography (GPC) at 140°C using trichlorobenzene as a solvent. The molecular weight is reported in Table 1 as polystyrene equivalents.

The results reported in Table I clearly demonstrate one of the advantages accruing from the use of diethyl zinc as a catalyst activator. Specifically, as will be apparent to those of skill in the art, at a given cocatalyst/catalyst molar ratio, the use of diethyl zinc provides desirable molecular weight control in the product when compared to the situation where diethyl zinc is not used in the process.

The results reported in Table 1 also clearly demonstrate another of the advantages accruing from the use of diethyl zinc as a catalyst activator in combination with a vanadium catalyst containing amide linkages to the metal. Specifically, as will be apparent to those of skill in the art, when DEZ is used as a catalyst activator, the catalyst efficiency of [(CyH)₂N]₂VCl₂ more than doubles when compared to the case where [(CyH)₂N]₂VCl₂ is used without DEZ and the molecular weight of the polymer product is desirably reduced when compared to the case where [(CyH)₂N]₂VCl₂ is used without DEZ - i.e., [(CyH)₂N]₂VCl₂ is more active with DEZ than without. Importantly, when DEZ is used as a catalyst activator, the catalyst efficiency of V(acac)₃ is reduced and the molecular weight of the polymer product is desirably reduced when compared to the case where V(acac)₃ is used without DEZ - i.e., V(acac)₃ is more active without DEZ than with DEZ. This is a surprising and unexpected result.

With further reference to Examples 1-10, increasing the cocatalyst/catalyst molar ratio from 70 to 280 results in a significant increase in catalyst efficiency when DEZ is used (i.e., Examples 2, 4 and 6) as a catalyst activator. In contrast, increasing the cocatalyst/catalyst molar ratio from 70 to 280 results in a slight change in catalyst efficiency when DEZ was not used as the catalyst activator (i.e., Examples 1, 3 and 5). This effect is illustrated in Table 2 in which selected data from Table 1 has been reorganized. Thus, the Examples illustrate that, in the absence of a catalyst activator as defined herein, increasing the cocatalyst/catalyst molar ratio does not necessarily result in an increased catalyst activity. This serves to further underscore the surprising and unexpected advantageous results accruing from the use of a catalyst activator such as DEZ.

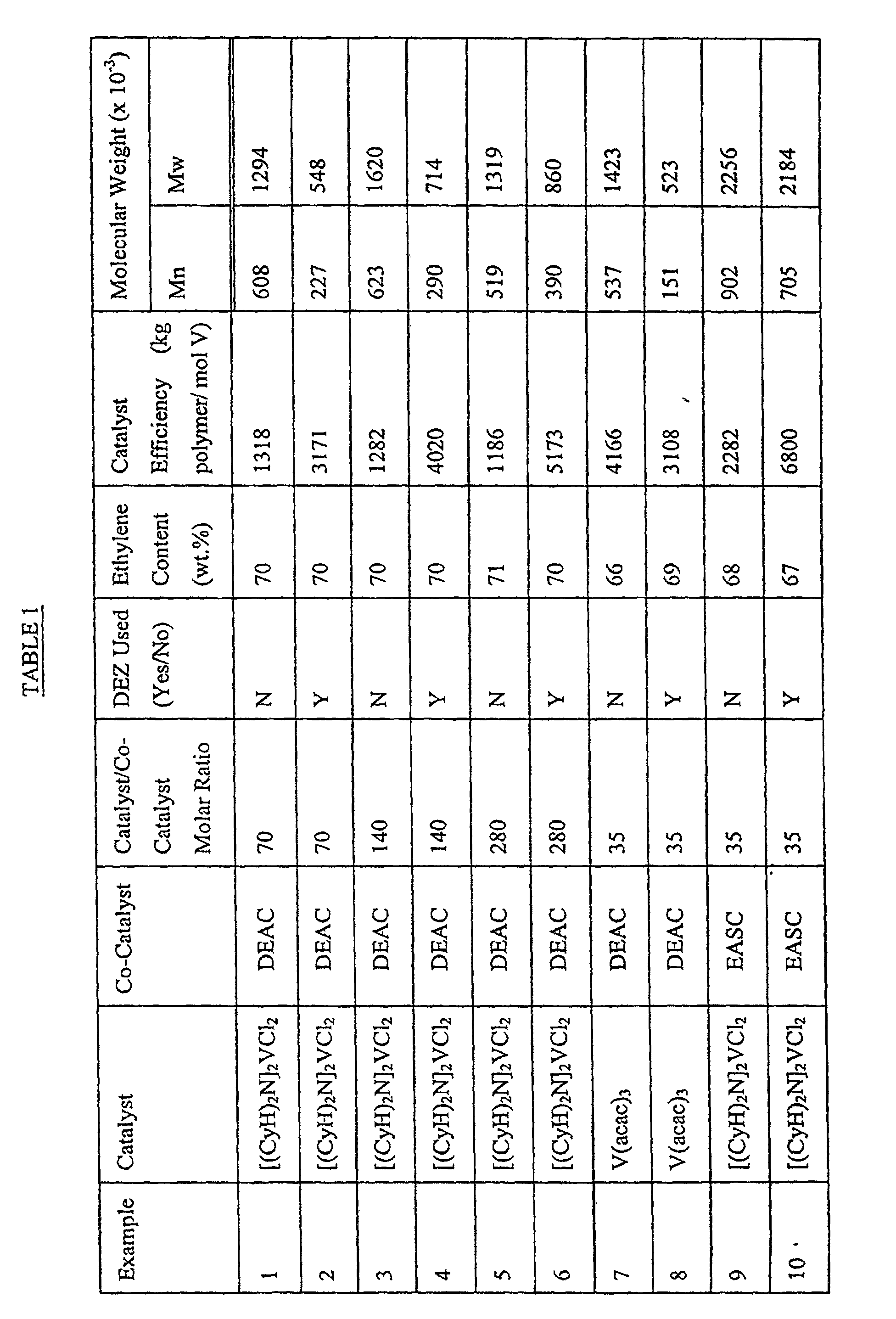

**TABLE 2**

| Example | Al/V Molar Ratio | DEZ Used (Y/N) | Catalyst Efficiency (kg polymer/mol V) |
|---|---|---|---|
| 2 | 70 | Y | 3171 |
| 4 | 140 | Y | 4020 |
| 6 | 280 | Y | 5173 |
| 1 | 70 | N | 1318 |
| 3 | 140 | N | 1282 |
| 5 | 280 | N | 1186 |

## Claims

1. An olefin monomer polymerization catalyst system comprising:
(i) a vanadium catalyst having the formula: 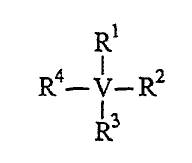 wherein:
R¹, R², R³ and R⁴ are the same or different and each is selected from a halogen and -(NR⁵R⁶), R⁵ and R⁶ are the same or different and each is selected from the group comprising an alkyl group, an aryl group, an alkenyl group, a cycloalkyl group and a silicon-containing hydrocarbyl group, and R¹ and R² may be combined to form a cyclic moiety, with the proviso that at least one of R¹, R², R³ and R⁴ is -(NR⁵R⁶),
or the formula: 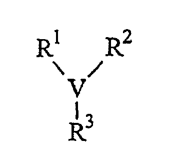 wherein:
R¹, R² and R³ are as defined above, with the proviso that at least one of R¹, R² and R³ is -(NR⁵R⁶);
(ii) an organoaluminum cocatalyst; and
(iii) a catalyst activator having the formula:
M(R⁷)ₙ
wherein M is a metal selected from Group 2 and Group 12 of the Periodic Table, R⁷ is a C₁-C₁₂ alkyl group and n is a number equal to the valence of M;
wherein at least one of the vanadium catalyst and organoaluminum cocatalyst contains a halogen moiety.

2. The catalyst system defined in claim 1, wherein R¹ and R² are the same or different and each is -(NR⁵R⁶), and R³ and R⁴ are the same or different and each is a halogen.

3. The catalyst system defined in any one of claims 1-2, wherein the halogen comprises chloride.

4. The catalyst system defined in any one of claims 1-2, wherein each of R⁵ and R⁶ is selected from the group comprising an ethyl group, a propyl group, an *i*-propyl group, a butyl group and a cyclohexyl group.

5. The catalyst system defined in any one of claims 1-4, wherein the organoaluminum cocatalyst comprises at least one compound having the formula:
(R⁸)ₚAlY_{q}
wherein R⁸ is selected from the group comprising a C₂-C₂₀ alkyl group, a C₂-C₁₀ alkoxyl group and a C₃-C₂₀ cycloalkyl group, Y is selected from the group comprising R⁸ and a halogen and p+q is 3.

6. The catalyst system defined in any one of claims 1-4, wherein the organoaluminum cocatalyst is selected from the group comprising trimethylaluminum, triethylaluminum, diethyl aluminum hydride, triisobutyl aluminum, tridecyl aluminum, tridodecyl aluminum, diethyl aluminum methoxide, diethyl aluminum ethoxide, diethyl aluminum phenoxide, diethyl aluminum chloride, ethyl aluminum dichloride, ethyl aluminum sesquichloride, diisobutylaluminum chloride, dioctylaluminum chloride; octylaluminum sequichloride, methyl diethoxy aluminum, methyl aluminoxane and mixtures thereof.

7. The catalyst system defined in any one of claims 1-6, wherein the catalyst activator is selected from the group comprising dimethyl zinc, diethyl zinc, dipropyl zinc, di-*i*-propyl zinc, di-*s*-butyl zinc, methylpropyl zinc, dipentyl zinc, methylpentyl zinc, dimethyl cadmium, diethyl cadmium, dipropyl cadmium, di-*i*-propyl cadmium, di-*s*-butyl cadmium, methylpropyl cadmium, dipentyl cadmium, methlypentyl cadmium, dimethyl mercury, diethyl mercury, dipropyl mercury, di-*i*-propyl mercury, di-*s*-butyl mercury, methylpropyl mercury, dipentyl mercury, methylpentyl mercury, dimethyl beryllium, diethyl beryllium, dipropyl beryllium, di-*i*-propyl beryllium, di-*s*-butyl beryllium, methylpropyl beryllium, dipentyl beryllium, methlypentyl beryllium, dimethyl magnesium, diethyl magnesium, dipropyl magnesium, di-*i*-propyl magnesium, di-*s*-butyl magnesium, methylpropyl magnesium, dipentyl magnesium, methlypentyl magnesium, dimethyl calcium, diethyl calcium, dipropyl calcium, di-*i*-propyl calcium, di-*s*-butyl calcium, methylpropyl calcium, dipentyl calcium, methlypentyl calcium, dimethyl strontium, diethyl strontium, dipropyl strontium, di-*i*-propyl strontium, di-*s*-butyl strontium, methylpropyl strontium, dipentyl strontium, methlypentyl strontium, dimethyl barium, diethyl barium, dipropyl barium, di-*i*-propyl barium, di-*s*-butyl barium, methylpropyl barium, dipentyl barium, methlypentyl barium and mixtures thereof.

8. The catalyst system defined in any one of claims 1-6, wherein the catalyst activator comprises diethyl zinc.

9. The catalyst system defined in any one of claims 1-8, further comprising a catalyst promotor selected from the group comprising ethyl-trichloroacetate (ETA), dichlorophenyl ethyl acetate (DCPEE), diethyl 2-chloro-2-phenyl malonate and mixtures thereof.

10. A process for production of an olefin polymer comprising the step of polymerizing an olefin monomer in the presence of the catalyst system defined in any one of claims 1-9.

11. The process defined in claim 9, wherein the olefin monomer is selected from the group comprising ethylene, an α-olefin monomer, a diolefin monomer and mixtures thereof.

12. The process defined in claim 9, wherein the olefin monomer comprises a mixture of ethylene and at least one α-olefin monomer.

13. An olefin polymerization catalyst kit comprising, as individual components, (i) the vanadium catalyst, (ii) the organoaluminum cocatalyst, and (iii) the catalyst activator defined in any one of claims 1-8.

14. The olefin polymerization catalyst kit defined in claim 13, further comprising a catalyst promotor selected from the group comprising ethyl-trichloroacetate (ETA), dichlorophenyl ethyl acetate (DCPEE), diethyl 2-chloro-2-phenyl malonate and mixtures thereof.

## Patentansprüche

1. Olefinmonomer-Polymerisationskatalysatorsystem, umfassend:
(i) einen Vanadiumkatalysator mit der Formel: 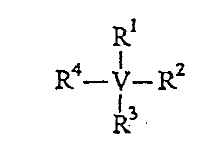 wobei R¹, R², R³ und R⁴ gleich oder verschieden sind und jeweils aus einem Halogen und -(NR⁵R⁶) ausgewählt sind, R⁵ und R⁶ gleich oder verschieden sind und jeweils aus der Gruppe ausgewählt sind, die eine Alkylgruppe, eine Arylgruppe, eine Alkenylgruppe, eine Cycloalkylgruppe und eine siliciumhaltige Kohlenwasserstoffgruppe umfasst, und R¹ und R² auch unter Bildung einer cyclischen Struktureinheit miteinander kombiniert sein können, mit der Maßgabe, dass wenigstens einer der Reste R¹, R², R³ und R⁴ = -(NR⁵R⁶) ist;
oder der Formel: 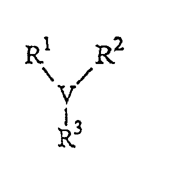 wobei R¹, R² und R³ wie oben definiert sind, mit der Maßgabe, dass wenigstens einer der Reste R¹, R² und R³ = -(NR⁵R⁶) ist;
(ii) einen aluminiumorganischen Cokatalysator; und
(iii) einen Katalysatoraktivator mit der Formel
M(R⁷)ₙ,
wobei M ein Metall ist, das aus Gruppe 2 und Gruppe 12 des Periodensystems ausgewählt ist, R⁷ eine C₁-C₁₂-Alkylgruppe ist und n eine Zahl ist, die gleich der Wertigkeit von M ist;
wobei wenigstens entweder der Vanadiumkatalysator oder der aluminiumorganische Cokatalysator eine Halogeneinheit enthält.

2. Katalysatorsystem gemäß Anspruch 1, wobei R¹ und R² gleich oder verschieden sind und jeweils -(NR⁵R⁶) sind und R³ und R⁴ gleich oder verschieden sind und jeweils ein Halogen sind.

3. Katalysatorsystem gemäß einem der Ansprüche 1 bis 2, wobei das Halogen Chlorid umfasst.

4. Katalysatorsystem gemäß einem der Ansprüche 1 bis 2, wobei R⁵ und R⁶ jeweils aus der Gruppe ausgewählt sind, die eine Ethylgruppe, eine Propylgruppe, eine Isopropylgruppe, eine Butylgruppe und eine Cyclohexylgruppe umfasst.

5. Katalysatorsystem gemäß einem der Ansprüche 1 bis 4, wobei der aluminiumorganische Cokatalysator wenigstens eine Verbindung mit der Formel
(R⁸)ₚAlY_{q}
umfasst, wobei R⁸ aus der Gruppe ausgewählt ist, die eine C₂-C₂₀-Alkylgruppe, eine C₂-C₁₀-Alkoxygruppe und eine C₃-C₂₀-Cycloalkylgruppe umfasst, Y aus der Gruppe ausgewählt ist, die R⁸ und ein Halogen umfasst, und p + q = 3 ist.

6. Katalysatorsystem gemäß einem der Ansprüche 1 bis 4, wobei der aluminiumorganische Cokatalysator aus der Gruppe ausgewählt ist, die Trimethylaluminium, Triethylaluminium, Diethylaluminiumhydrid, Triisobutylaluminium, Tridecylaluminium, Tridodecylaluminium, Diethylaluminiummethoxid, Diethylaluminiumethoxid, Diethylaluminiumphenoxid, Diethylaluminiumchlorid, Ethylaluminiumdichlorid, Ethylaluminiumsesquichlorid, Diisobutylaluminiumchlorid, Dioctylaluminiumchlorid, Octylaluminiumsesquichlorid, Methyldiethoxyaluminium, Methylaluminoxan und Gemische davon umfasst.

7. Katalysatorsystem gemäß einem der Ansprüche 1 bis 6, wobei der Katalysatoraktivator aus der Gruppe ausgewählt ist, die Dimethylzink, Diethylzink, Dipropylzink, Diisopropylzink, Di-s-butylzink, Methylpropylzink, Dipentylzink, Methylpentylzink, Dimethylcadmium, Diethylcadmium, Dipropylcadmium, Diisopropylcadmium, Di-s-butylcadmium, Methylpropylcadmium, Dipentylcadmium, Methylpentylcadmium, Dimethylquecksilber, Diethylquecksilber, Dipropylquecksilber, Diisopropylquecksilber, Di-s-butylquecksilber, Methylpropylquecksilber, Dipentylquecksilber, Methylpentylquecksilber, Dimethylberyllium, Diethylberyllium, Dipropylberyllium, Diisopropylberyllium, Di-s-butylberyllium, Methylpropylberyllium, Dipentylberyllium, Methylpentylberyllium, Dimethylmagnesium, Diethylmagnesium, Dipropylmagnesium, Diisopropylmagnesium, Di-s-butylmagnesium, Methylpropylmagnesium, Dipentylmagnesium, Methylpentylmagnesium, Dimethylcalcium, Diethylcalcium, Dipropylcalcium, Diisopropylcalcium, Dis-butylcalcium, Methylpropylcalcium, Dipentylcalcium, Methylpentylcalcium, Dimethylstrontium, Diethylstrontium, Dipropylstrontium, Diisopropylstrontium, Di-s-butylstrontium, Methylpropylstrontium, Dipentylstrontium, Methylpentylstrontium, Dimethylbarium, Diethylbarium, Dipropylbarium, Diisopropylbarium, Di-s-butylbarium, Methylpropylbarium, Dipentylbarium, Methylpentylbarium und Gemische davon umfasst.

8. Katalysatorsystem gemäß einem der Ansprüche 1 bis 6, wobei der Katalysatoraktivator Diethylzink umfasst.

9. Katalysatorsystem gemäß einem der Ansprüche 1 bis 8, das weiterhin einen Katalysatorpromotor umfasst, der aus der Gruppe ausgewählt ist, die Ethyltrichloracetat (ETA), Dichlorphenylethylacetat (DCPEE), Diethyl-2-chlor-2-phenylmalonat und Gemische davon umfasst.

10. Verfahren zur Herstellung eines Olefinpolymers, das den Schritt des Polymerisierens eines Olefinmonomers in Gegenwart des Katalysatorsystems gemäß einem der Ansprüche 1 bis 9 umfasst.

11. Verfahren gemäß Anspruch 9, wobei das Olefinmonomer aus der Gruppe ausgewählt ist, die Ethylen, ein α-Olefinmonomer, ein Diolefinmonomer und Gemische davon umfasst.

12. Verfahren gemäß Anspruch 9, wobei das Olefinmonomer ein Gemisch von Ethylen und wenigstens einem α-Olefinmonomer umfasst.

13. Olefin-Polymerisationskatalysator-Kit, der als einzelne Komponenten (i) den Vanadiumkatalysator, (ii) den aluminiumorganischen Cokatalysator und (iii) den Katalysatoraktivator, wie sie in einem, der Ansprüche 1 bis 8 definiert sind, umfasst.

14. Olefin-Polymerisationskatalysator-Kit gemäß Anspruch 13, der weiterhin einen Katalysatorpromotor umfasst, der aus der Gruppe ausgewählt ist, die Ethyltrichloracetat (ETA), Dichlorphenylethylacetat (DCPEE), Diethyl-2-chlor-2-phenylmalonat und Gemische davon umfasst.

## Revendications

1. Système de catalyseur de polymérisation de monomère d'oléfine comprenant :
(i) un catalyseur de vanadium présentant la formule : 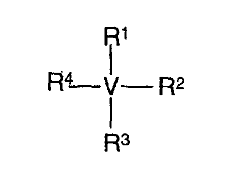 où:
R¹, R², R³ et R⁴ sont identiques ou différents et choisis à chaque fois parmi un atome d'halogène et -(NR⁵R⁶), R⁵ et R⁶ sont identiques ou différents et choisis à chaque fois parmi un groupe alkyle, un groupe aryle, un groupe alcényle, un groupe cycloalkyle et un groupe hydrocarbyle contenant du silicium, et R¹ et R² peuvent être combinés pour former une moitié cyclique, à condition qu'au moins un parmi R¹, R², R³ et R⁴ soit -(NR⁵R⁶),
ou la formule : 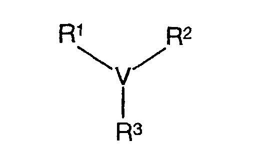 où :
R¹, R² et R³ sont comme définis ci-dessus à condition qu'au moins un parmi R¹, R² et R³ soit -(NR⁵R⁶) ;
(ii) un co-catalyseur d'organoaluminium ; et
(iii) un activateur de catalyseur présentant la formule :
M(R⁷)ₙ
où M est un métal choisi dans le groupe 2 et le groupe 12 de la classification périodique des éléments, R⁷ est un groupe alkyle en C₁-C₁₂ et n est un nombre égal à la valence de M ;
où au moins un parmi le catalyseur de vanadium et le co-catalyseur d'organoaluminium contient une moitié halogène.

2. Système de catalyseur selon la revendication 1, dans lequel R¹ et R² sont identiques ou différents et chacun est -(NR⁵R⁶), et R³ et R⁴ sont identiques ou différents et chacun est un atome d'halogène.

3. Système de catalyseur selon l'une quelconque des revendications 1-2, dans lequel l'halogène comprend un chlorure.

4. Système de catalyseur selon l'une quelconque des revendications 1-2, dans lequel chacun parmi R⁵ et R⁶ est choisi parmi un groupe éthyle, un groupe propyle, un groupe i-propyle, un groupe butyle ou un groupe cyclohexyle.

5. Système de catalyseur selon l'une quelconque des revendications 1-4, dans lequel le co-catalyseur d'organoaluminium comprend au moins un composé ayant la formule:
(R⁸)ₚAlY_{q}
où R⁸ est choisi parmi un groupe alkyle en C₂-C₂₀, un groupe alcoxyle en C₂-C₁₀ et un groupe cycloalkyle en C₃-C₂₀, Y est choisi parmi R₈ et un atome d'halogène et p+q est égal à 3.

6. Système de catalyseur selon l'une quelconque des revendications 1-4, dans lequel le co-catalyseur d'organoaluminium est choisi parmi le triméthylaluminium, le triéthylaluminium, l'hydrure de diéthylaluminium, le triisobutylaluminium, le tridécylaluminium, le tridodécylaluminium, le méthoxyde de diéthylaluminium, l'éthoxyde de diéthylaluminium, le phénoxyde de diéthylaluminium, le chlorure de diéthylaluminium, le dichlorure d'éthylaluminium, le sesquichlorure d'éthylaluminium, le chlorure de diisobutylaluminium, le chlorure de dioctylaluminium, le sesquichlorure d'octylaluminium, le méthyldiéthoxyaluminium, l'aluminoxane de méthyle et des mélanges de ceux-ci.

7. Système de catalyseur selon l'une quelconque des revendications 1-6, dans lequel l'activateur de catalyseur est choisi parmi le diméthylzinc, le diéthylzinc, le dipropylzinc, le di-i-propylzinc, le di-s-butylzinc, le méthylpropylzinc, le dipentylzinc, le méthylpentylzinc, le diméthylcadmium, le diéthylcadmium, le dipropylcadmium, le di-i-propylcadmium, le di-s-butylcadmium, le méthylpropylcadmium, le dipentylcadmium, le méthylpentylcadmium, le diméthylmercure, le diéthylmercure, le dipropylmercure, le di-i-propylmercure, le di-s-butylmercure, le méthylpropylmercure, le dipentylmercure, le méthylpentylmercure, le diméthylbéryllium, le diéthylbéryllium, le dipropylbéryllium, le di-i-propylbéryllium, le di-s-butylbéryllium, le méthylpropylbéryllium, le dipentylbéryllium, le méthylpentylbéryllium, le diméthylmagnésium, le diéthylmagnésium, le dipropylmagnésium, le di-i-propylmagnésium, le di-s-butylmagnésium, le méthylpropylmagnésium, le dipentylmagnésium, le méthylpentylmagnésium, le diméthylcalcium, le diéthylcalcium, le dipropylcalcium, le di-i-propylcalcium, le di-s-butylcalcium, le méthylpropylcalcium, le dipentylcalcium, le méthylpentylcalcium, le diméthylstrontium, le diéthylstrontium, le dipropylstrontium, le di-i-propylstrontium, le di-s-butylstrontium, le méthylpropylstrontium, le dipentylstrontium, le méthylpentylstrontium, le diméthylbarium, le diéthylbarium, le dipropylbarium, le di-i-propylbarium, le di-s-butylbarium, le méthylpropylbarium, le dipentylbarium, le méthylpentylbarium et des mélanges de ceux-ci.

8. Système de catalyseur selon l'une quelconque des revendications 1-6, dans lequel l'activateur de catalyseur comprend le diéthylzinc.

9. Système de catalyseur selon l'une quelconque des revendications 1-8 comprenant en outre un promoteur de catalyseur choisi parmi le trichloroacétate d'éthyle (ETA), l'acétate de dichlorophényléthyle (DCPEE), le 2-chloro-2-phénylmalonate de diéthyle et des mélanges de ceux-ci.

10. Procédé pour la production d'un polymère d'oléfine comprenant l'étape consistant à polymériser un monomère d'oléfine en présence du système de catalyseur défini dans l'une quelconque des revendications 1-9.

11. Procédé selon la revendication 9, dans lequel le monomère d'oléfine est choisi parmi l'éthylène, un monomère d'oléfine-α, un monomère de dioléfine et des mélanges de ceux-ci.

12. Procédé selon la revendication 9, dans lequel le monomère d'oléfine comprend un mélange d'éthylène et d'au moins un monomère d'oléfine-α.

13. Kit de catalyseur de polymérisation d'oléfine comprenant comme constituants individuels (i) le catalyseur de vanadium, (ii) le co-catalyseur d'organoaluminium, et (iii) l'activateur de catalyseur défini selon l'une quelconque des revendications 1-8.

14. Kit de catalyseur de polymérisation d'oléfine selon la revendication 13 comprenant en outre un promoteur de catalyseur choisi parmi le trichloroacétate d'éthyle (ETA), l'acétate de dichlorophényléthyle (DCPEE), le 2-chloro-2-phénylmalonate de diéthyle et des mélanges de ceux-ci.
